# EUROPÄISCHE PATENTSCHRIFT

(11) **EP 1 893 852 B1**
(45) Veröffentlichungstag und Bekanntmachung des Hinweises auf die Patenterteilung: **07.12.2011**
(21) Anmeldenummer: 06754286.0
(22) Anmeldetag: 10.06.2006
(51) Int. Cl.: F01N 3/20, B01D 35/31, E03B 7/14

(54) **REDUKTIONSMITTELVERSORGUNGSSYSTEM FÜR EINEN ABGASREINIGUNGSKATALYSATOR UND HEIZEINRICHTUNG HIERFÜR**
REDUCING AGENT SUPPLY SYSTEM FOR AN EXHAUST GAS PURIFYING CATALYTIC CONVERTER AND HEATING DEVICE THEREFOR
SYSTEME D'ALIMENTATION EN AGENT DE REDUCTION DESTINE A UN CATALYSEUR D'EPURATION DES GAZ D'ECHAPPEMENT ET DISPOSITIF DE CHAUFFAGE CORRESPONDANT

(30) Priorität: 22.06.2005 DE 102005029290; 29.10.2005 DE 102005051967; 20.04.2006 DE 102006018440
(43) Veröffentlichungstag der Anmeldung: 05.03.2008
(73) Patentinhaber: Eichenauer Heizelemente GmbH & Co. KG, 76870 Kandel (DE)
(72) Erfinder: STARCK, Roland, 76756 Bellheim (DE); FLICK, Franz, 76877 Offenbach (DE); STRITZINGER, Jürgen, 76872 Feckenfeld (DE); STOLL, Manfred, 76870 Kandel (DE); THOME, Gerhard, 76709 Kronau (DE)
(74) Vertreter: Mommer, Niels
(86) Internationale Anmeldenummer: PCT/EP2006/005588
(87) Internationale Veröffentlichungsnummer: WO 2006/136306

(56) Entgegenhaltungen:
- WO-A-2004/024336
- WO-A-2006/050318
- DE-A1- 4 432 576
- DE-A1- 10 341 996
- US-A- 5 884 475
- US-A1- 2003 209 482

## Beschreibung

Die Erfindung betrifft ein Reduktionsmittelversorgungssystem für einen Abgasreinigungskatalysator, wie es standardmäßig in Kraftfahrzeugen eingebaut ist. Ein solches Versorgungssystem umfasst einen Reduktionsmitteltank zur Aufnahme von Reduktionsmittel, eine Verbindungsleitung, um Reduktionsmittel aus dem Reduktionsmitteltank zu dem Abgasreinigungskatalysator zu befördern, und eine Pumpe, um Reduktionsmittel durch die Verbindungsleitung von dem Harnstofftank zu dem Katalysator zu pumpen. Ein derartiges Reduktionsmittelversorgungssystem ist beispielsweise aus der DE 103 32 114 A1 bekannt.

Aus der WO 2004/024336 A1 ist ein Reduktionsmittelversorgungssystem mit einem Zerstäuber bekannt, der ein Kapillarrohr aus Stahl aufweist, das durch einen hindurch fließenden elektrischen Strom beheizt wird, um durch das Rohr strömende Lösung zu verdampfen.

Mit dem Reduktionsmittel werden Stickstoffoxide in dem Abgasreinigungskatalysator zu Stickstoff reduziert. Als Reduktionsmittel im eigentlichem Sinne wird standardmäßig Ammoniak verwendet, der aus Harnstoff gewonnen wird. Im Sinne der Anmeldung wird deshalb unter einem Reduktionsmittel auch dessen Vorprodukt, d. h. Harnstoff, verstanden, aus dem das eigentliche Reduktionsmittel im chemischen Sinne, d. h. Ammoniak, gewonnen wird.

Harnstoff wird von einem Abgasreinigungskatalysator als Ammoniaklieferant benötigt. Bei Frost kann die Harnstofflösung einfrieren, so dass eine Heizeinrichtung benötigt wird, um die Harnstofflösung möglichst rasch aufzutauen, damit der für den Betrieb des Katalysators benötigte Harnstoff zur Verfügung gestellt werden kann.

Aufgabe der Erfindung ist es, einen kostengünstigen Weg aufzuzeigen, wie ein Reduktionsmittelversorgungssystem für einen Abgasreinigungskatalysator einer Verbrennungskraftmaschine bei Temperaturen unter dem Gefrierpunkt in kurzer Zeit in einen betriebsbereiten Zustand versetzt werden kann.

Diese Aufgabe wird mit einem Reduktionsmittelversorgungssystem der Eingangs genannten Art erfindungsgemäß dadurch gelöst, dass zumindest ein Abschnitt der Verbindungsleitung als ein korrosionsbeständiges Metallrohr, vorzugsweise aus Edelstahl, ausgebildet ist, das mit elektrischen Anschlüssen versehen ist, um zum Auftauen von Reduktionsmittel einen elektrischen Heizstrom durch die Verbindungsleitung zu leiten.

Die Aufgabe wird ferner gelöst durch eine Heizeinrichtung umfassend ein korrosionsbeständiges Metallrohr zum Eintauchen in die Lösung, das als Ansaugrohr an eine Pumpe zum Fördern der aufgetauten Lösung anschließbar ist und an dem elektrische Anschlüsse angebracht sind, um einen Heizstrom durch das Metallrohr zu leiten, der das Metallrohr zum Auftauen der Lösung erwärmt.

Da für Abgasreinigungskatalysatoren von Verbrennungskraftmaschinen standardmäßig Harnstofflösung verwendet wird, wird im folgenden zur Erläuterung der Erfindung auf ein Harnstoffversorgungssystem Bezug genommen und anstellte des allgemeinen Begriffs "Reduktionsmittel" konkret von Harnstoff gesprochen.

Bei der vorliegenden Erfindung wird in einem Harnstoffversorgungssystem ein korrosionsbeständiges Metallrohr sowohl als Widerstandsheizelement zum Auftauen von Harnstofflösung als auch als Leitung zum Fördern aufgetauter Harnstofflösung verwendet. Auf diese Weise kann auf einen separaten Heizeinsatz verzichtet werden und mit minimalem Aufwand gefrorene Harnstofflösung aufgetaut werden.

Da bei der vorliegenden Erfindung das Metallrohr sowohl als Widerstandsheizelement als auch als Leitung verwendet wird, werden, abgesehen von den elektrischen Anschlüssen zum Einleiten des Heizstroms, keine zusätzlichen Bauteile benötigt, um auch bei Temperaturen unter dem Gefrierpunkt das Funktionieren des Harnstoffversorgungssystems zu gewährleisten. Im Vergleich zu Lösungen mit separaten Heizeinsätzen, die mehr oder weniger komplex aufgebaut sind, ist die Erfindung nicht nur kostengünstiger, sondern arbeitet auch zuverlässiger, da durch eine geringere Anzahl verwendeter Bauteile auch eine entsprechend geringere Anzahl möglicher Fehlerquellen vorhanden ist.

Ein weiterer Vorteil der Erfindung besteht darin, dass die Heizeinrichtung durch entsprechendes Biegen des Metallrohrs mit geringem Aufwand an jede beliebige Form eines Harnstofftanks angepasst werden kann. In der Regel wird bei jedem neuen Model eines PKWs die Form des verwendeten Harnstofftanks an geänderte räumliche Verhältnisse angepasst. Während bei Harnstoffversorgungssystemen mit einem separaten Heizeinsatz häufig mit großem Aufwand die Konstruktion des Heizeinsatzes geändert werden muss, lässt sich bei der vorliegenden Erfindung eine Anpassung an eine andere Geometrie durch entsprechend geänderte Biegungen des Metallrohrs problemlos realisieren. Insbesondere kann die Heizleistung des Metallrohrs gezielt in einzelne Bereiche des Harnstoffversorgungssystems geleitet werden, die zur Versorgung des Abgasreinigungskatalysators vorrangig aufgetaut werden müssen oder in denen sich größere Mengen Harnstofflösung befinden und deshalb eine größere Heizleistung benötigt wird. Beispielsweise kann das Metallrohr in den Harnstofftank hineinragen und dort in mehreren Windungen, beispielsweise spiral- oder wendelförmig, angeordnet werden. Auf diese Weise kann die Heizleistung in einem unteren Bereich des Tanks, in den die Ansaugöffnung der Verbindungsleitung hineinragt, konzentriert werden, so dass rasch eine kleine aber ausreichende Menge Harnstofflösung angesaugt werden kann. Insbesondere kann das Metallrohr in einem von einem Haupttank abgeteilten Aufbaubehälter angeordnet sein, dessen Fassungsvermögen so klein ist, dass sein Inhalt besonders rasch aufgetaut werden kann.

Aufgrund seiner relativ kleinen Masse kann das Metallrohr sehr rasch aufgeheizt werden. Zum Auftauen von Harnstofflösung in der Verbindungsleitung selbst wird deshalb wesentlich weniger Zeit benötigt als zum Auftauen von Harnstofflösung in dem Harnstofftank. Bevorzugt wird deshalb die von einer Autobatterie zur Verfügung gestellte Leistung zunächst nur auf einen Abschnitt der Verbindungsleitung konzentriert, der in den Harnstoff tank hineinragt. Bevorzugt wird dann erst zu einem späteren Zeitpunkt, wenn etwas Harnstofflösung in dem Harnstofftank aufgetaut ist, die Verbindungsleitung auf ihrer gesamten Länge beheizt.

Die Verwendung eines Metallrohrs als Verbindungsleitung eines Harnstoffversorgungssystems hat zudem den Vorteil, dass ein Metallrohr im Gegensatz zu einem Schlauch nicht durchhängt und deshalb leichter montiert werden kann, da weitgehend auf zusätzliche Maßnahmen verzichtet werden kann, um es an einen gewünschten Ort zu halten. Das Metallrohr kann ferner als Druckleitung genutzt werden, so dass Harnstofflösung mit einem Druck von beispielsweise 5 bis 6 bar in den Katalysator injiziert werden kann. Bevorzugt hat das Metallrohr einen Außendurchmesser von weniger als 3 mm und eine Wandstärke zwischen 0,1 mm und 0,3 mm, so dass es bei der Montage leicht in eine gewünschte Form gebogen werden kann.

Weitere Einzelheiten und Vorteile der Erfindung werden anhand von Ausführungsbeispielen unter Bezugnahme auf die beigefügten Zeichnungen erläutert. Die darin beschriebenen Merkmale können einzeln oder in Kombination verwendet werden, um bevorzugte Ausgestaltungen der Erfindung zu schaffen. Es zeigen:
- Fig. 1: eine schematische Darstellung eines erfindungsgemäßen Harnstoffversorgungssystems für einen Abgasreinigungskatalysator eines Kraftfahrzeugs;
- Fig. 2: ein weiteres Ausführungsbeispiel eines erfindungsgemäßen Harnstoffversorgungssystems;
- Fig. 3: einen Längsschnitt einer Verbindungsleitung der Ausführungsbeispiele;
- Fig. 4: ein weiteres Ausführungsbeispiel einer Verbindungsleitung im Querschnitt mit einem eingesetztem Schlauch;
- Fig. 5: der in Figur 4 dargestellte Schlauch in einer Schrägansicht;
- Fig. 6: ein weiteres Ausführungsbeispiel einer Verbindungsleitung mit dem eingesetztem Schlauch im Querschnitt;
- Fig. 7: das in Figur 6 dargestellte Ausführungsbeispiel in einem weiteren Betriebszustand;
- Fig. 8: ein Ausführungsbeispiel der Ankopplung der Verbindungsleitung an ein Kopplungsstück;
- Fig. 9: ein weiteres Ausführungsbeispiel der Ankopplung der Verbindungsleitung an ein Kopplungsstück; und
- Fig. 10: ein weiteres Ausführungsbeispiel der Ankopplung der Verbindungsleitung an ein Kopplungsstück.

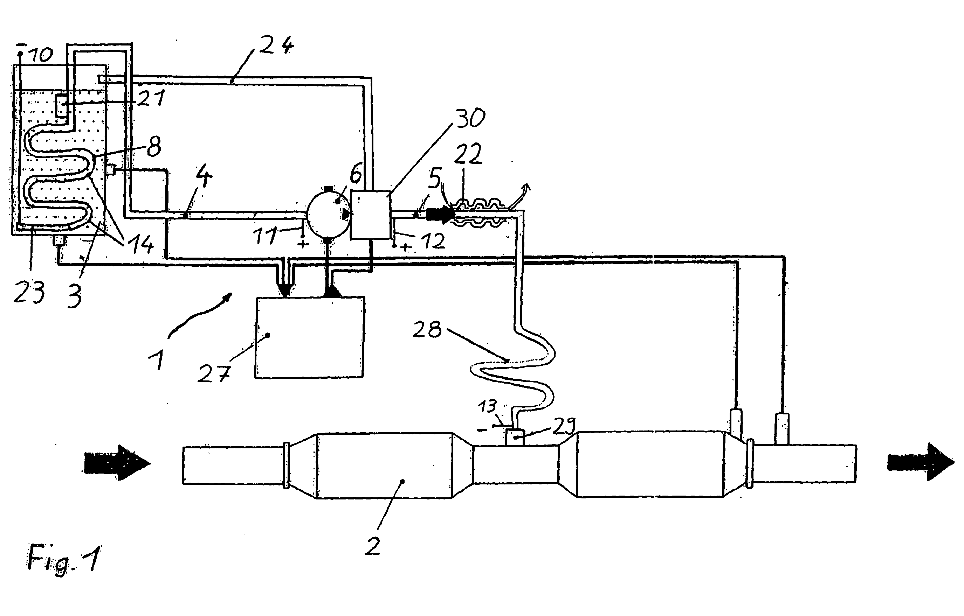

Figur 1 zeigt schematisch ein Harnstoffversorgungssystem 1 eines Abgasreinigungskatalysators 2 eines Kraftfahrzeugs. In dem Abgasreinigungskatalysator 2 werden Stickoxide (NO, NO₂) mittels Ammoniak (NH₃) zu Stickstoff reduziert. Der dafür benötigte Ammoniak wird aus Harnstofflösung gewonnen, die von dem Harnstoffversorgungssystem 1 bereit gestellt wird.

Das in Figur 1 dargestellte Harnstoffversorgungssystem 1 umfasst einen Harnstofftank 3 zur Aufnahme von Harnstofflösung, eine Verbindungsleitung 4, 5, die den Harnstofftank 3 mit dem Katalysator 2 verbindet, und eine Pumpe 6 mit einem Dosierventil 30, um Harnstofflösung durch die Verbindungsleitung 4, 5 von dem Harnstofftank 3 zu dem Katalysator zu pumpen. Die Verbindungsleitung 5 mündet in eine Düse 29, über die Harnstofflösung in den Katalysator 2 injiziert wird. Zur Steuerung seiner Komponenten umfasst das dargestellte Harnstoffversorgungssystem 1 ferner eine Steuereinheit 27.

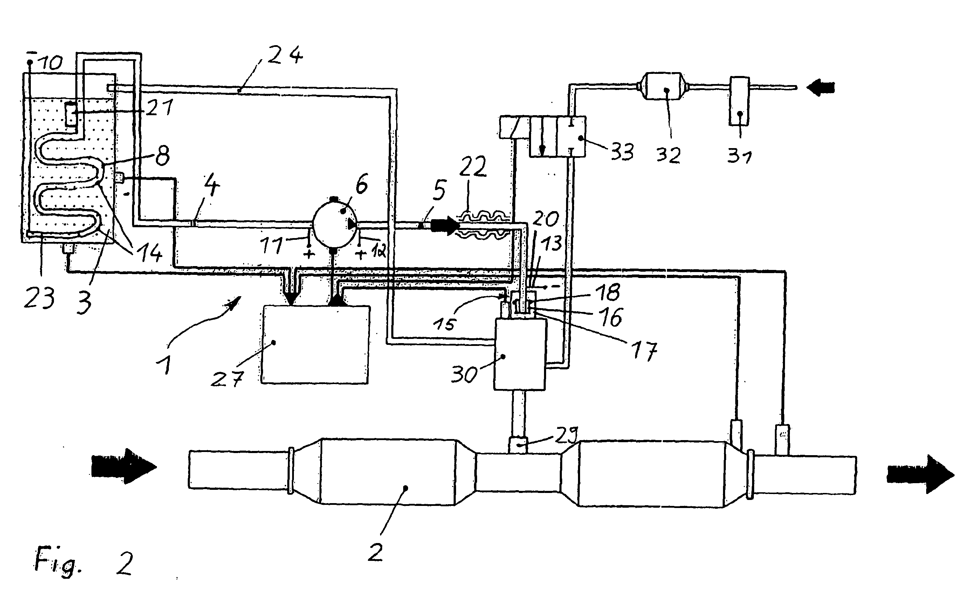

In Figur 2 ist ein weiteres Ausführungsbeispiel dargestellt, bei dem das Dosierventil 30 an ein Druckluftsystem umfassend einen Luftvorrat 31, einen Luftverdichter 32 und ein Regelventil 33 angeschlossen ist. Das Dosierventil 30 mündet dabei in die Düse 29, so dass das Einspritzen der Harnstofflösung in den Katalysator 29 mit Druckluft erfolgt.

Bei Frost kann die Harnstofflösung einfrieren und muss dann aufgetaut werden, bevor dem Katalysator 2 der benötigte Harnstoff zur Verfügung gestellt werden kann. Das dargestellte Harnstoffversorgungssystem 1 umfasst deshalb eine Heizeinrichtung zum Auftauen der Harnstofflösung. Diese Heizeinrichtung 8 ist in die Verbindungsleitung 4, 5 integriert.

Die Verbindungsleitung 4, 5 ist als Metallrohr aus Edelstahl, bevorzugt aus V4A-Stahl, ausgebildet, an dem elektrischen Anschlüsse 10, 11, 12, 13 angebracht sind, um Heizstrom durch das Metallrohr 4, 5 zu leiten, der es zum Auftauen der Lösung erwärmt. Das Metallrohr 4 ragt als Ansaugrohr mit einem Ende 23 in den Harnstofftank 3 hinein und ist dort in mehreren Windungen 14 angeordnet, die bestimmungsgemäß in die Harnstofflösung eintauchen, so dass in dem Harnstofftank 3 ein entsprechend großer Teil der von dem Metallrohr 4 frei gesetzten Heizleistung zum Auftauen der Harnstofflösung zu Verfügung steht. Auf diese Weise erfüllt das Metallrohr 4 vorteilhaft sowohl die Funktion, als Widerstandsheizelement Harnstofflösung aufzutauen, als auch die Funktion als Ansaugrohr Harnstofflösung zu fördern.

Bei dem dargestellten Ausführungsbeispiel besteht die Verbindungsleitung 4, 5 aus zwei Abschnitten zwischen denen die Pumpe 6 und das Dosierventil 30 angeordnet ist. Die Metallrohre 4, 5, von denen diese Abschnitte gebildet werden, sind jeweils an ihrem der Pumpe 6 zugewandten Ende mit einem elektrischen Anschluss 11, 12 versehen, der bestimmungsgemäß an den Pluspol einer Autobatterie angeschlossen wird. Auf diese Weise wird erreicht, dass die Harnstofflösung auf ihrem Weg durch die Pumpe 6 und das Dosierventil 30 keine elektrische Potentialdifferenz durchläuft und folglich die Möglichkeit einer unerwünschten Elektrolyse praktisch ausgeschlossen ist.

Das jeweils andere Ende der beiden Abschnitte 4, 5 der Verbindungsleitung ist mit einem weiteren elektrischen Anschluss 10, 13 versehen, der bestimmungsgemäß an den Minuspol der Autobatterie angeschlossen wird. In vorteilhafter Weise wird so die Verbindungsleitung 4, 5 auf ihrer vollen Länge einschließlich ihrer Endabschnitte beheizt. Bei dem in den Harnstofftank 3 hinein ragenden Ende des Metallrohrs 4 ist darauf zu achten, dass der daran angebrachte elektrische Anschluss 10 korrosionsbeständig ist, so dass dieser nicht durch Harnstofflösung angegriffen wird. Bevorzugt wird der Anschluss 10 durch eine obere Öffnung aus dem Tank 3 herausgeführt. Der Anschluss 10 und die Windungen 14 können dabei zur Erhöhung der mechanischen Stabilität mit einem Stützkörper aus Kunststoff, beispielsweise einem Stützgerippe, verbunden sein.

Bevorzugt wird der elektrische Widerstand des Metallrohrs 4 so gewählt, dass durch den Heizstrom in dem in den Harnstofftank 3 hinein ragenden Abschnitt eine Heizleistung von mindestens 30 Watt freigesetzt wird. Besonders günstig ist ein elektrischer Widerstand, der so groß ist, dass zwischen den Anschlüssen 10, 11 des Metallrohrs 4 eine Heizleistung von 50 bis 300 Watt, bevorzugt 80 bis 150 Watt freigesetzt wird. Bei einer üblichen Versorgungsspannung einer Autobatterie von 13,5 V ist deshalb Edelstahl, insbesondere V4A-Stahl, wegen seiner für Metalle relativ geringen elektrischen Leitfähigkeit besonders gut als Material für die Verbindungsleitung 4, 5 geeignet. Im Hinblick auf typische Förderleistungen eines Harnstoffversorgungssystems 1 und die benötigten Heizleistungen hat das Metallrohr 4, 5 bevorzugt einen Innendurchmesser zwischen 1,5 mm und 3 mm, besonders bevorzugt zwischen 1,8 mm und 2,5 mm. Bei dem dargestellten Ausführungsbeispiel beträgt der Innendurchmesser 2,0 mm. Die Wandstärke beträgt bevorzugt zwischen 0,1 mm und 0,3 mm, bei dem dargestellten Ausführungsbeispiel 0,2 mm, so dass sich das Rohr bei der Montage relativ leicht biegen lässt und einen relativ hohen elektrischen Widerstand hat. Derartige geringe Wandstärken und Durchmesser führen zu einer relativ geringen Gesamtmasse des Metallrohrs 4, 5 und damit zu kurzen Aufheizzeiten.

Mit der Steuereinrichtung 27 kann bei Inbetriebnahme des Harnstoffversorgungssystems 1 zunächst die von der Autobatterie zur Verfügung gestellte Leistung auf das Metallrohr 4 konzentriert werden, so dass möglichst rasch Harnstofflösung in dem Harnstofftank 3 auftaut. Aufgrund der relativ geringen Masse der Verbindungsleitung 5 kann darin enthaltene Harnstofflösung sehr rasch aufgetaut werden, so dass es genügt erst zu einem späteren Zeitpunkt von der Autobatterie zur Verfügung gestellte Leistung zum Beheizen des Metallrohrs 5 zu nutzen.

Um die Förderleistung des Harnstoffversorgungssystems 1 für eine gegebene Anwendung zu drosseln, kann der Querschnitt der Metallrohrs 4, 5 an einer Stelle durch Verformung reduziert werden. Vorteilhaft können dabei die Länge des Metallrohrs und dessen übrige Parameter unverändert bleiben, so dass dessen elektrischer Gesamtwiderstand und damit die Heizleistung gleich bleiben.

Bei dem dargestellten Ausführungsbeispiel hat die Verbindungsleitung 5 eine Gesamtlänge von etwa 4 m. Um die Montage zu vereinfachen kann das die Verbindungsleitung 5 bildende Metallrohr durch eine Steckkupplung aus mehreren Teilstücken zusammengesetzt sein. Zum Anschluss an die Pumpe 6, das Dosierventil 30 und die Düse 29 tragen die Metallrohre 4, 5 an ihren entsprechenden Enden eine geeignete Anschlusskupplung 15, die in Figur 2 beispielhaft dargestellt ist. Diese kann beispielsweise als eine aufgesteckte Metallhülse mit elektrischen Kontakten ausgebildet sein. Eine weitere Möglichkeit besteht darin, für die Anschlusskupplung ein aufgelötetes Anschlussstück in Form einer Buchse 16 zur Durchmesservergrößerung zu verwenden, das von einer angespritzten Kunststoffkappe 17 mit einer O-Ring-Dichtung 18 umgeben ist. Der elektrische Anschluss 13 kann dann beispielsweise durch eine elektrische Anschlussfahne 20, die bevorzugt unmittelbar vor der angespritzten Kappe angeordnet ist, gebildet werden. Möglich ist es ferner einen vorgefertigten Rundstecker zu benutzen.

Günstig ist es, die Anschlusskupplung 15, bevorzugt auf der Katalysatorseite, mit einem Schwingungselement zu ergänzen, so dass Vibrationen des Fahrzeugs aufgenommen werden können. Beispielsweise kann hierfür ein geeignetes Kunststoffelement oder ein Faltenbalg, verwendet werden. Bevorzugt ist die Verbindungsleitung 5 selbst als Schwingungselement ausgebildet, beispielsweise mittels Windungen 28 vor der Anschlussstelle. Dabei ist es günstig, das Metallrohr 5 gemäß Figur 1 direkt an der Düse 29 zu befestigen.

Zum Schutz vor einer Überhitzung ist an dem Metallrohr 4 ein Temperatursensor 21 angebracht, so dass bei Gefahr einer Überhitzung eine entsprechende Reduktion des Heizstroms bewirkt wird. Bevorzugt ist der Temperatursensor 21 als PTC-Element (positiver Temperaturkoeffizient) oder NTC-Element (negativer Temperaturkoeffizient) ausgebildet. Ein PTC-Element ist ein Kaltleiter, dessen elektrischer Widerstand bei einer Temperaturerhöhung drastisch ansteigt, während der elektrische Widerstand eines NTC-Element bei Temperaturerhöhung stark abfällt. Durch geeigneter Auslegung der Heizleistung kann jedoch erreicht werden, dass eine Überhitzung ausgeschlossen ist und folglich auf eine Temperaturüberwachung verzichtet werden. Eine weitere Möglichkeit, eine Überhitzung zu vermeiden, besteht darin, das Metallrohr 4, 5 aus einem PTC-Material herzustellen.

Zur elektrischen Isolation kann das Metallrohr 4, 5 innen und/oder außen mit einer Lack- oder Kunststoffschicht, beispielsweise aus PVDF, überzogen werden. Bei dem dargestellten Ausführungsbeispiel ist die Verbindungsleitung 5 zwischen der Pumpe 6 und dem Abgasreinigungskatalysator 2 aber durch ein äußeres Rohr, bei dem dargestellten Ausführungsbeispiel ein Rippenrohr 22 (nur teilweise gezeigt) geschützt, das vorteilhaft nicht nur für eine elektrische und thermische Außenisolierung sorgt, sondern darüber hinaus auch einen sehr guten mechanischen Schutz bewirkt. Als Material für das Rippenrohr 22 ist Polypropylen bevorzugt.

Das äußere Rohr 22 kann ferner als Zusatzheizung verwendet werden, so dass eingefrorene Harnstofflösung mit geringerem Stromverbrauch aufgetaut werden kann. Hierfür wird zwischen dem äußeren Rohr 22 und dem Metallrohr 5 ein erwärmtes Fluid, insbesondere ein durch Abwärme der Verbrennungsmaschine erwärmtes Fluid, beispielsweise Abgas, hindurch geleitet. Das dargestellte Reduktionsmittelversorgungssystem hat deshalb einen Fluid-Einlass und einen Fluid-Auslass, die an das äußere Rohr 22 angeschlossen sind, um zwischen dem äußeren Rohr 22 und dem Metallrohr 5 ein durch Abwärme der Verbrennungskraftmaschine erwärmtes Fluid hindurchzuleiten. Hierbei kommt es dadurch, dass das innere Rohr 4, 5 ein Metallrohr ist, zu einem besonders effektiven Wärmeaustausch.

Wie bereits erwähnt, wird als Material für die Verbindungsleitung 4, 5 bevorzugt Edelstahl, insbesondere V4A-Stahl, verwendet. V4A-Stahl ist hinreichend korrosionsbeständig, so dass er von Harnstofflösung nicht angegriffen wird. Prinzipiell kann das die Verbindungsleitung 4, 5 bildende Metallrohr aber auch aus weniger korrosionsbeständigen Metallen oder Metalllegierungen gefertigt werden, indem durch eine geeignete korrosionsbeständige Schutzschicht eine schädliche Einwirkung der Harnstofflösung ausgeschlossen wird.

Bei den dargestellten Ausführungsbeispielen zweigt von der Verbindungsleitung 5 eine Rückführleitung 24 ab, mit der aufgetaute Harnstofflösung in den Harnstofftank 3 zurückgeleitete werden kann. Auf diese Weise kann dem Entstehen eines isolierenden Luftspalts zwischen dem Ansaugrohr 23 und gefrorener Harnstofflösung in dem Harnstofftank 3 entgegengewirkt werden. Eine erfindungsgemäße Beheizung der Rückführleitung 23 ist möglich, aber nicht erforderlich, so dass diese nicht unbedingt als Metallrohr ausgebildet sein muss und beispielsweise auch ein Kunststoffschlauch sein kann. Bevorzugt ist, dass für verschiedene Abschnitte der Verbindungsleitung 4, 5 Metallrohre mit unterschiedlichem Innendurchmesser verwendet werden, so dass Heizleistung und Fördervolumen für verschiedene Abschnitte optimiert werden können.

Die Rückführleitung 24 wird bei dem in Figur 1 gezeigten Ausführungsbeispiel durch die räumliche Nähe zu beheizten Teilen des Harnstoffversorgungssystems 1 (Metallrohr 4, Pumpe 6) miterwärmt.

Bei Frost kann Harnstofflösung in der Verbindungsleitung 4, 5 einfrieren und durch eine damit verbundene Volumenzunahme von etwa 7 % die Verbindungsleitung 4, 5 beschädigen oder sogar sprengen. Um derartigen Frostschäden vorzubeugen, können für die Verbindungsleitung 4, 5 Metallrohre mit einem von der Kreisform abweichenden, vorzugsweise ovalen oder elliptischen, Querschnitt verwendet werden. Wenn Harnstofflösung in einem Metallrohr 4 mit einem derartigen Querschnitt einfriert, so führt die dabei auftretende Volumenausdehnung dazu, dass sich der Querschnitt des Metallrohrs der Kreisform annähert oder diese sogar erreicht. Auf diese Weise kann sich die Querschnittsfläche des Metallrohrs 4 und damit das Innenvolumen der Verbindungsleitung 4, 5 bei Frost anpassen, so dass ein Bersten verhindert wird.

Bevorzugt wird für das Metallrohr 4 ein Werkstoff gewählt, der derart elastisch ist, dass das Metallrohr 4 beim Auftauen weitgehend seine ursprüngliche Form annimmt, beispielsweise Federstahl. Prinzipiell sind derartige elastische Eigenschaften des Metallrohrs 4 aber nicht erforderlich, da die Verbindungsleitung 4, 5 normalerweise entleert wird, bevor das Harnstoffversorgungssystem 1 und die dazugehörende Heizeinrichtung abgeschaltet werden. Zu einem Einfrieren von Harnstofflösung in der Verbindungsleitung 4, 5 kann es deshalb nur bei einer Fehlfunktion kommen, deren Auswirkungen bei den beschriebenen Ausführungsbeispielen zerstörungsfrei abgefangen werden kann.

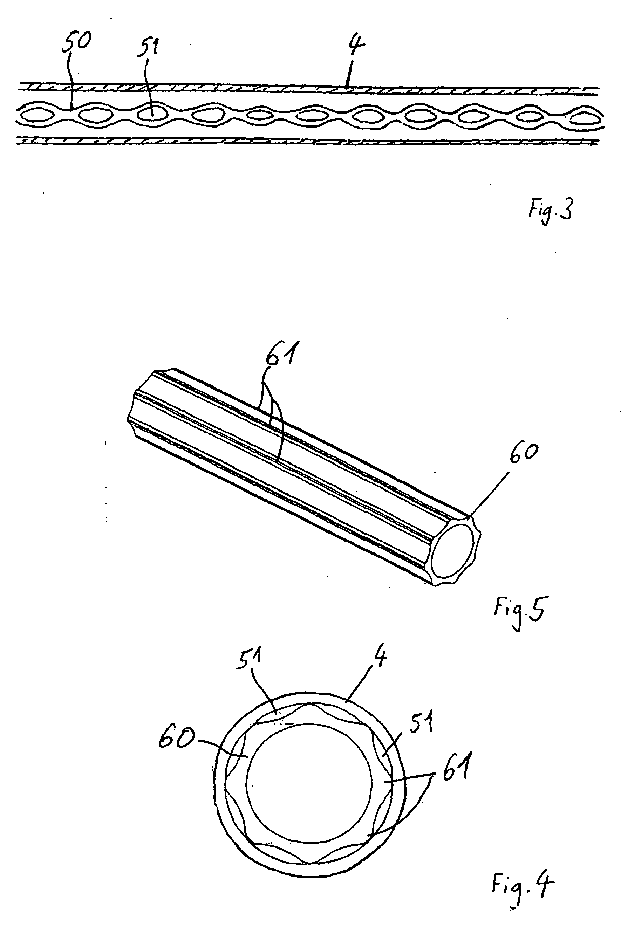

Um den beschriebenen Frostschäden vorzubeugen wird jedoch bevorzugt eine andere Maßnahme angewendet, die im folgendem anhand von Figur 3 erläutert wird. Figur 3 zeigt einen Längsschnitt einer Verbindungsleitung 4, 5 der anhand von Figuren 1 und 2 erläuterten Harnstoffversorgungssysteme 1. In dem die Verbindungsleitung bildenden Metallrohr 4 ist ein volumenelastisches Ausgleichselement 50 angeordnet, das bei einem Einfrieren von umgebender Harnstofflösung komprimiert wird, um eine Volumenausdehnung der Harnstofflösung auszugleichen. Bei dem dargestellten Ausführungsbeispiel handelt es sich bei dem Ausgleichselement 50 um einen Schlauch mit gasgefüllten Kammern 51.

Die Kammern 51 sind dabei durch abschnittsweise Verschweißen eines ursprünglich durchgehend hohlen Schlauches gebildet. Möglich ist es auch, einzelne volumenelastischen Elemente, beispielsweise Kugeln, durch einen elastischen Strumpf miteinander zu verbinden und als Ausgleichselement 50 in die Verbindungsleitung 4, 5 einzubringen.

Als Ausgleichselement 50 können beispielsweise auch verschlossene Hohlfasern oder Schaumstoffe verwendet werden. Geeignete Schaumstoffe lassen sich insbesondere aus Thermoplasten herstellen, wobei lediglich darauf zu achten ist, dass zumindest einige der Zellen des Schaumstoffs geschlossen sind, so dass diese die Funktion der gasgefüllten Kammern des in Figur 3 dargestellten Schlauchs übernehmen und durch einen beim Einfrieren der Harnstofflösung auftretenden Eisdruck komprimiert werden können.

Zur Vermeidung von Frostschäden genügt es, das volumenelastische Ausgleichselement in einem Abschnitt des Metallrohrs 4 anzuordnen. Es ist nicht erforderlich, dass es sich über die gesamte Länge der Verbindungsleitung 4, 5 erstreckt.

Aus dem vorhergehenden ergibt sich, dass als volumenelastisches Ausgleichselement insbesondere eine gasgefüllte Kammer 51 verwendet werden kann. Eine solche gasgefüllte Kammer 51 kann in einem Ausgleichsmittel, beispielsweise dem Schlauch 50 von Figur 3, angeordnet sein, das in das Metallrohr 4 eingebracht wird. Möglich ist es aber auch, die gasgefüllte Kammer 51 als Zwischenraum zwischen der Innenseite der Verbindungsleitung 4, 5 und der Außenseite eines in der Verbindungsleitung 4, 5 angeordneten Schlauches 60 auszubilden, der im Betrieb Harnstofflösung führt. Wichtig in diesem Zusammenhang ist, dass bei einem Komprimieren der gasgefüllten Kammer 51 nicht unbedingt eine Erhöhung des Gasdrucks in der Kammer 51 erfolgen muss. Ist nämlich die gasgefüllte Kammer 51 gemäß Figur 4 als Zwischenraum zwischen der Innenseite des Metallrohrs 4, 5 und der Außenseite eines darin angeordneten Schlauches 60, der die Flüssigkeit führt, ausgebildet, kann über die Rohrenden des Metallrohres 4, 5 bei Kompression der Kammer 51 ein Druckausgleich erfolgen. Für die Kompression der Kammer 51 zum Ausgleich einer Volumenausdehnung der einfrierenden Flüssigkeit sind in einem solchen Fall die elastischen Eigenschaften der von dem Schlauch 60 gebildeten Kammerwände maßgeblich. Bei einer Volumenausdehnung der einfrierenden Flüssigkeit verformen sich die von dem Schlauch 60 gebildeten Kammerwände, so dass sich das Volumen der Kammer 51 reduziert.

Ein Ausführungsbeispiel eines geeigneten Schlauches 60 ist in Figur 5 dargestellt. In Figur 4 ist ein Querschnitt durch eine Verbindungsleitung 4 mit eingesetztem Schlauch 60 dargestellt. Geeignete Materialien für das Ausgleichsmittel, insbesondere den Schlauch 60 sind beispielsweise Thermoplaste, worunter im Rahmen der Anmeldung auch thermoplastische Elastomere zu verstehen sind. Gut geeignet sind insbesondere Polyamid, Polyethylen und Polypropylen sowie Ethylen-Propylen-Dien-Kautschuk. Besonders gut geeignet sind Fluorpolymere, insbesondere modifizierte strahlenvernetzte Fluorpolymere, beispielsweise Polyvinyldifluorid.

Zwischen dem Schlauch 60 als Ausgleichsmittel und der Verbindungsleitung 4 ergeben sich gasgefüllte Kammern 51 als volumenelastische Ausgleichselemente, die in Figur 4 dargestellt sind. Der Schlauch 60 hat an seiner Außenseite Rippen 61, mit denen er an der Innenseite des Metallrohrs 4 anliegt, so dass die luftgefüllten Kammern 51 von den Rippen 61 begrenzt sind. Bevorzugt handelt es sich bei den Rippen 61 um Längsrippen, da dies eine kostengünstige Herstellung des Schlauchs durch extrudieren erleichtert. Prinzipiell kann auf Rippen 61 an der Außenseite des Schlauchs 60 auch verzichtet werden, da sich auch bei Verwendung eines glatten Schlauches geeigneten Durchmessers zwischen einem flüssigkeitsführenden Schlauch und dem Metallrohr der Verbindungsleitung 4, 5 ein Zwischenraum als gasgefüllte Kammer 51 schaffen lässt. Als zusätzliche Maßnahme können die eine oder mehrere gasgefüllte Kammern 51 bei abschalten des Reduktionsmittelversorgungssystems mit einem Fluid, insbesondere Druckluft, gefüllt werden, beispielsweise um Reduktionsmittel aus der Versorgungsleitung in den Harnstofftank 3 zu pressen.

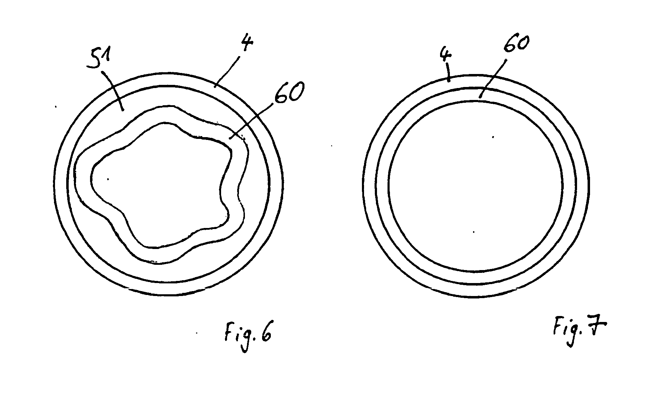

Ein derartiges Ausführungsbeispiel ist in den Figuren 6 und 7 schematisch im Querschnitt dargestellt. Figur 6 zeigt das Metallrohr 4 der Versorgungsleitung mit dem innenliegenden Schlauch 60, durch den im Betrieb Reduktionsmittel strömt. Zwischen dem Schlauch 60 und dem Metallrohr 4 befindet sich ein gasgefüllter Zwischenraum 51, der als luftgefüllte Kammer ein volumenelastisches Ausgleichselement bildet. Bei dem in Figur 6 dargestellten Ausführungsbeispiel wurde der Zwischenraum 51 nach Abschalten des Reduktionsmittelversorgungssystems mit Pressluft gefüllt. Im Betrieb ist ein Einfrieren von Reduktionsmittel nicht zu befürchten, so dass die Druckluft aus dem Zwischenraum 51 abgelassen werden kann. Der Betriebsdruck des durch den Schlauch 60 fließenden Reduktionsmittels bewirkt dann, dass sich der Schlauch 60 an die Innenfläche des Metallrohrs 4 anlegt und der Zwischenraum 51 verschwindet.

Ein wichtiger Aspekt der vorliegenden Erfindung, der auch selbstständig Bedeutung haben kann, betrifft deshalb ein vor Frostschäden geschütztes Reduktionsmittelversorgungssystem für einen Abgasreinigungskatalysator einer Verbrennungskraftmaschine, insbesondere eines Kraftfahrzeugs, umfassend:
- einen Reduktionsmitteltank 3 zur Aufnahme von Reduktionsmittel,
- eine Verbindungsleitung 4, 5, um Reduktionsmittel aus dem Reduktionsmitteltank 3 zu einem Abgasreinigungskatalysator 2 zu befördern, und
- eine Pumpe 6, um Reduktionsmittel durch die Verbindungsleitung 4, 5 von dem Reduktionsmitteltank 3 zu dem Katalysator 2 zu pumpen,
wobei in der Verbindungsleitung 4 ein volumenelastisches Ausgleichselement 51 angeordnet ist, das bei einem Einfrieren von Reduktionsmittel in der Verbindungsleitung komprimiert wird, um eine Volumenausdehnung des Reduktionsmittels auszugleichen. Ein derartiges Reduktionsmittelsversorgungssystem kann prinzipiell auch auf andere Weise als durch das Durchleiten eines elektrischen Heizstroms durch eine als Metallrohr ausgebildete Verbindungsleitung 4,5 beheizt werden.

Um bei einem Einfrieren von Reduktionsmittel in der Verbindungsleitung 4, 5 eine Volumenausdehnung des Reduktionsmittels auszugleichen, kann die Verbindungsleitung 4, 5 als Ausgleichsmittel alternativ oder zusätzlich zu einem von der Kreisform abweichenden Querschnitt oder dem beschriebenen volumenelastischen Ausgleichselement 50 ferner dehnbare Kammern enthalten, die beispielsweise in Anschlüsse der Verbindungsleitung 4, 5 integriert sind, mit denen die Verbindungsleitung 4, 5 an den Harnstofftank 3, das Dosierventil 30, die Düse 29 oder die Pumpe 6 angeschlossen ist. Durch Verwendung geeigneter elastischer Kunststoffe für diese Anschlüsse kann eine Anpassung des Volumens der Verbindungsleitung 4, 5 beispielsweise durch eine Längenveränderung der Anschlüsse der Verbindungsleitung 4, 5 oder die Ausdehnung einer entsprechenden Kammer bewirkt werden.

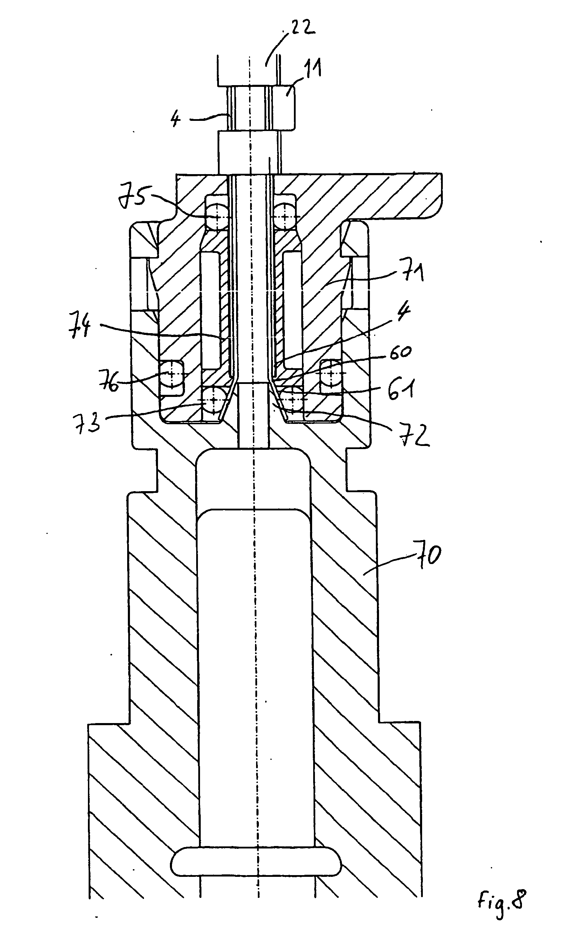

Die Verwendung eines Harnstoff führenden Schlauchs 60 als Ausgleichsmittel in den Verbindungsleitungen 4, 5 hat den Vorteil, dass zusätzliche Maßnahmen zum Isolieren des Metallrohrs 4, 5 gegenüber der zu erwärmenden Flüssigkeit (Harnstofflösung) nicht mehr erforderlich sind, da der Schlauch 60 sowohl eine elektrische als auch eine stoffliche Isolation bewirkt. An Stelle relativ teuren Edelstahls für die Metallrohre 4, 5 können deshalb auch kostengünstigere, weniger korrosionsbeständige Metalle für die Versorgungsleitungen verwendet werden. Allerdings ist bei Verwendung eines Harnstoff führenden Schlauchs 60 in der Verbindungsleitung 4, 5 dafür zu sorgen, dass an den Anschlussstellen der Verbindungsleitung kein Reduktionsmittel in den oder die gasgefüllten Zwischenräume 51 zwischen der Außenseite des Schlauchs 60 und der Innenseite des Metallrohrs 4, 5 gelangt. Anhand der Figuren 8 bis 10 werden im Folgendem einige Ausführungsbeispiele für eine geeignete Ankopplung der Verbindungsleitung 4, 5, beispielsweise an die Pumpe 6, erläutert.

Figur 8 zeigt im Querschnitt die Ankopplung der elektrisch beheizten Verbindungsleitung 4 an ein Kopplungsstück 70, beispielsweise der Pumpe 6. Das Metallrohr 4 ist von einem isolierenden äußeren Kunststoffrohr 22 umgeben und trägt eine Anschlussfahne 11. Das Metallrohr 4 ragt mit dem darin angeordneten flüssigkeitsführenden Schlauch 60 in ein inneres Kopplungsstück 71 hinein, das formschlüssig mit dem äußerem Kopplungsstück 70 verrastet ist. Der Schlauch 60 wird mit seiner aus dem Metallrohr 4 herausragenden, aufgeweiteten Schlauchendfläche 61 auf einen konisch geformten Ansatz 72 des Kopplungsstücks 70 gepresst. Die Endfläche 61 des Schlauchs 60 wird mittels einer Dichtung 73 bei dem dargestellten Ausführungsbeispiel ein O-Ring, gegen den Ansatz 72 gepresst. Diese Dichtung 73 wird zwischen den Kopplungsstücken 70 und 71 verpresst. Die Dichtung 73 gibt diesen Druck an die Endfläche 61 des Schlauchs weiter, so dass dieser flüssigkeitsdicht gegen den Ansatz 72 gepresst wird.

Um zu verhindern, dass bei einer Beschädigung des Schlauchs 60 Flüssigkeit austreten kann, ist die Verbindungsleitung 4 zusätzlich von einer Dichtung 75, bei dem dargestellten Ausführungsbeispiel ein O-Ring umgeben, der von dem Kupplungsstück 71 gegen die Verbindungsleitung 4 gepresst wird. Die Dichtung 75 wird von dem Kopplungsstück 74 in ihrer in Figur 8 dargestellten Position fixiert. Zur Erhöhung der Sicherheit ist ferner zwischen den Kopplungsstücken 70 und 71 eine weitere Dichtung 76 in Form eines O-Rings angeordnet.

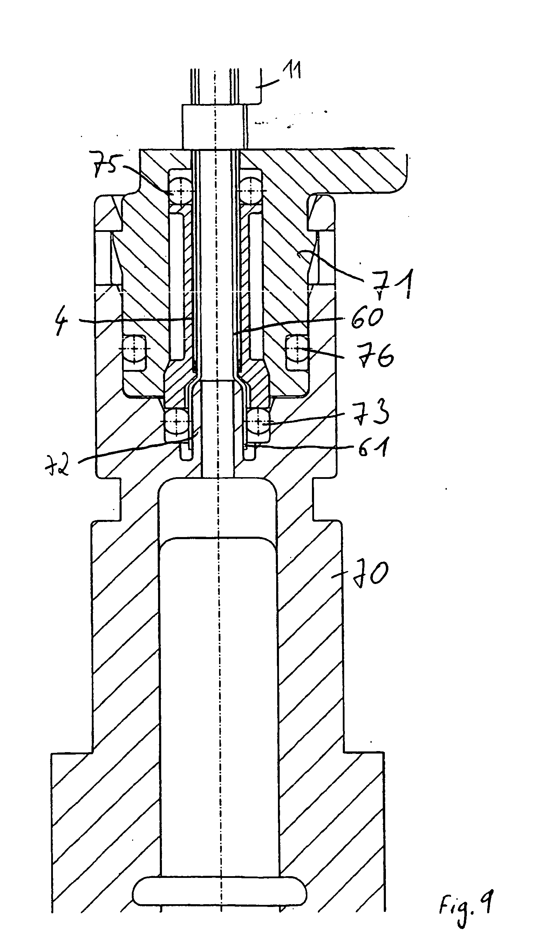

In Figur 9 ist eine weitere Ausführungsform zur flüssigkeitsdichten Ankopplung der Verbindungsleitung 4 dargestellt. Das in Figur 9 dargestellte Ausführungsbeispiel unterscheidet sich von dem in Figur 8 dargestellten Ausführungsbeispiel im Wesentlichen dadurch, dass die Schlauchendfläche 61 an ein zylindrisch geformtes Gegenstück 72 des Kopplungsstücks 70 gepresst wird, wobei die Dichtung 73 in eine Nut des Kopplungsstücks 70 verpresst ist.

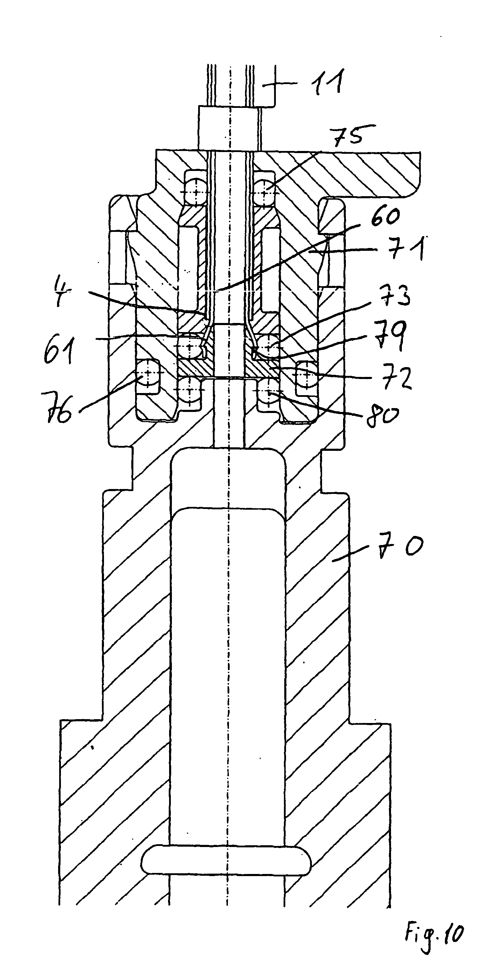

Eine weitere Möglichkeit zur flüssigkeitsdichten Ankopplung der Verbindungsleitung 4 ist in Figur 10 dargestellt. Das in Figur 10 dargestellte Ausführungsbeispiel unterscheidet sich von dem in Figur 8 dargestellten Ausführungsbeispiel dadurch, dass das Gegenstück 72, gegen welches die Endfläche 61 des Schlauches 60 gepresst wird, einen Hinterschnitt aufweist um den Sitz der Endfläche 61 zu verbessern. Der Hinterschnitt 79 lässt sich nur schwer bei einem in das Kupplungsstück 70 integrierten Gegenstück 72 verwirklichen, wie dies bei den Ausführungsbeispielen 8 und 9 der Fall ist. Bei dem in Figur 10 dargestellten Ausführungsbeispiel ist das Gegenstück 72 deshalb ein separates Teil, das zwischen den Kupplungsstücken 70 und 71 mit den als O-Ringen ausgeführten Dichtungen 73 und 80 eingespannt ist.

Die im vorhergehende beschriebene Erfindung kann zum Auftauen beliebiger Flüssigkeiten genutzt werden. Sie betrifft deshalb eine Heizeinrichtung, umfassend ein Metallrohr 4 zum Fördern der aufgetauten Flüssigkeit, wobei an dem Metallrohr 4 elektrische Anschlüsse 10, 11 angebracht sind, um einen Heizstrom durch das Metallrohr 4 zu leiten, der das Metallrohr 4 zum Auftauen der Flüssigkeit erwärmt.

Ein Aspekt der im vorhergehenden anhand der verschiedenen Ausführungsbeispiele erläuterten Erfindung besteht darin, dass ein Metallrohr sowohl zum Fördern einer Flüssigkeit als auch dazu genutzt wird, einen Heizstrom zum Auftauen der Flüssigkeit zu leiten. Dieser Aspekt ist auch bei dem anhand der Figuren 4 und 5 beschriebenen Ausführungsbeispiel verwirklicht, bei dem die Flüssigkeit durch einen in dem Metallrohr 4 angeordneten Schlauch 60 geleitet wird. Bei einer eventuellen Beschädigung des innen liegenden Schlauchs 60 ist die Anlage weiterhin funktionsfähig und lediglich der Frostschutz eingeschränkt, da Flüssigkeit in eine oder mehrere der Kammern 51 eindringen kann, so dass ein Einfrieren der Flüssigkeit zu einer Beschädigung des Metallrohrs führen kann. Da Kunststoffschläuche leichter beschädigt und undicht werden als Metallrohre, ist diese Sicherheit vor dem Austreten von Flüssigkeit ein wichtiger Vorteil der im vorhergehenden beschriebenen Erfindung.

Verzichtet man auf diese Sicherheit und nimmt ein eventuelles Austreten von Flüssigkeit in Kauf, beispielsweise indem die Verbindungsleitungen 4, 5 eines Harnstoffsystems als Kunststoffschläuche ohne flüssigkeitsdichte Metallrohre ausgeführt werden, lässt sich das Verlegen der Verbindungsleitung 4, 5 durch innen oder außen angeordnete metallische Heizelemente erleichtern, die einerseits dem Schlauch die vorteilhafte Formstabilität eines Metallrohr verleihen und andererseits das Beheizen von in dem Schlauch befindlicher Flüssigkeit ermöglichen. Beispielsweise können diese Heizelemente als ein geschlitztes oder perforiertes Metallrohr ausgeführt sein, in dem der Schlauch in wärmeleitendem Kontakt verläuft. Besonders geeignet sind Schlitze oder Langlöcher in dem Metallrohr. Bei einem Einfrieren von Flüssigkeit kann sich der Schlauch in die Schlitze des Metallrohrs ausdehnen, so dass die mit dem Einfrieren verbundene Volumenausdehnung aufgenommen werden kann. Ferner kann auch ein metallisches Flechtrohr, insbesondere ein Edelstahlflechtrohr verwendet werden, das den Schlauch außen oder innen stützt.

## Patentansprüche

1. Reduktionsmittelversorgungssystem für einen Abgasreinigungskatalysator einer Verbrennungskraftmaschine, insbesondere eines Kraftfahrzeugs, umfassend:
einen Reduktionsmitteltank (3) zur Aufnahme von Reduktionsmittel,
eine Verbindungsleitung (4, 5), um Reduktionsmittel aus dem Reduktionsmitteltank (3) zu einem Abgasreinigungskatalysator (2) zu befördern, und
eine Pumpe (6), um Reduktionsmittel durch die Verbindungsleitung (4, 5) von dem Reduktionsmitteltank (3) zu dem Katalysator (2) zu pumpen,
durch gekennzeichnet, dass zumindest ein Abschnitt der Verbindungsleitung (4, 5) als ein korrosionsbeständiges Metallrohr ausgebildet ist, das mit elektrischen Anschlüssen (10, 11, 12, 13) versehen ist, um zum Auftauen von Reduktionsmittel einen elektrischen Heizstrom durch die Verbindungsleitung (4, 5) zu leiten, und
dass ein Abschnitt des Metallrohrs (5) von einem äußeren Rohr (22) oder Schlauch umgeben ist.

2. Reduktionsmittelversorgungssystem nach Ansprüch 1
**dadurch gekennzeichnet, dass** das Metallrohr (4, 5) durch eine Kupplung, insbesondere eine Steckkupplung, aus mehreren Teilstücken zusammen gesetzt ist.

3. Reduktionsmittelversorgungssystem nach einem der vorhergehenden Ansprüchen, **dadurch gekennzeichnet, dass** die Pumpe (6) zwischen zwei Abschnitten der Verbindungsleitung (4, 5) angeordnet ist, die jeweils als Metallrohre ausgeführt und mit elektrischen Anschlüssen(10, 11, 12, 13) versehen sind, wobei die der Pumpe (6) nächstliegenden Anschlüsse (11, 12) der beiden Metallrohre (4, 5) im Betrieb jeweils auf dem selben elektrischen Potential liegen.

4. Reduktionsmittelversorgungssystem nach einem der vorhergehenden Ansprüche,
**dadurch gekennzeichnet, dass** ein Abschnitt des Metallrohrs (5) von einem Rippen- oder Wellrohr (22) aus Kunststoff umgeben ist.

5. Reduktionsmittelversorgungssystem nach einem der vorhergehenden Ansprüche, **gekennzeichnet durch** einen Fluid-Einlass und einen Fluid-Auslass, um zwischen dem äußeren Rohr (22) und dem Metallrohr (5) ein erwärmtes Fluid, insbesondere ein **durch** Abwärme der Verbrennungskraftmaschine erwärmendes Fluid, durchzuleiten.

6. Reduktionsmittelversorgungssystem nach einem der vorhergehenden Ansprüche, **dadurch gekennzeichnet, dass** die Verbindungsleitung (4, 5) ein Ausgleichsmittel (50, 51, 60) enthält, um bei einem Einfrieren von Reduktionsmittel in der Verbindungsleitung (4, 5) eine Volumenausdehnung des Reduktionsmittels auszugleichen.

7. Reduktionsmittelversorgungssystem nach Anspruch 6, **dadurch gekennzeichnet, dass** das Ausgleichsmittel ein in der Verbindungsleitung (4, 5) angeordnetes volumenelastisches Ausgleichselement (50, 51) ist, das bei einem Einfrieren von Reduktionsmittel in der Verbindungsleitung (4, 5) komprimiert wird, um eine Volumenausdehnung des Reduktionsmittels auszugleichen.

8. Reduktionsmittelversorgungssystem nach Anspruch 7, **dadurch gekennzeichnet, dass** das Ausgleichselement eine gasgefüllte Kammer (51) ist.

9. Reduktionsmittelversorgungssystem nach Anspruch 8, **dadurch gekennzeichnet, dass** die gasgefüllte Kammer (51) als Zwischenraum zwischen der Innenseite der Verbindungsleitung (4,5) und der Außenseite eines in der Verbindungsleitung angeordneten Schlauches (60) ausgebildet ist, der im Betrieb Harnstofflösung führt.

10. Reduktionsmittelversorgungssystem nach Anspruch 9, **dadurch gekennzeichnet, dass** der Schlauch (60) an seiner Außenseite Rippen (61), insbesondere Längsrippen (61), aufweist.

11. Reduktionsmittelversorgungssystem nach Anspruch 7 oder 8, **dadurch gekennzeichnet, dass** das Ausgleichselement (50) ein Schlauch mit gasgefüllten Kammern (51) ist.

12. Reduktionsmittelversorgungssystem nach einem der vorhergehenden Ansprüche,
**dadurch gekennzeichnet, dass** das Metallrohr (4) einen von der Kreisform abweichenden, vorzugsweise ovalen oder elliptischen, Querschnitt hat.

13. Heizeinrichtung zum Auftauen einer korrosiven Lösung, für den Reduktionsmitteltink eines Reduktionsmittelversorgungssystem nach einem der vorhergehenden Ansprüche, umfassend:
ein Metallrohr (4) zum Fördern der aufgetauten Lösung,
wobei an dem Metallrohr (4) elektrische Anschlüsse (10, 11) angebracht sind, um einen Heizstrom durch das Metallrohr (4) zu leiten, der das Metallrohr (4) zum Auftauen der Lösung erwärmt, und
wobei das Metallrohr (4) mehrere Windungen (14) aufweist, mit denen es bestimmungsgemäß als Ansaugrohr in den Harnstofftank hineinragt.

14. Heizeinrichtung nach Anspruch 13, **dadurch gekennzeichnet, dass** das Metallrohr (4) ein korrosionsbeständiges Metallrohr zum Eintauchen in die Lösung ist, das als Ansaugrohr an eine Pumpe (6) anschließbar ist.

15. Heizeinrichtung nach Anspruch 13 oder 14, **dadurch gekennzeichnet, dass** das Metallrohr (4) einen Innendurchmesser zwischen 1,0 mm und 4 mm, bevorzugt zwischen 1,2 mm und 3 mm, hat.

16. Heizeinrichtung nach einem der Ansprüche 13 bis 15, **dadurch gekennzeichnet, dass** an dem Metallrohr (4) ein Temperatursensor (21) angebracht ist.

17. Heizeinrichtung nach einem der Ansprüche 13 bis 16, **dadurch gekennzeichnet, dass** an einem Ende des Metallrohrs (4) eine Anschlusskupplung zum Anschluss an eine Pumpe (6) angebracht ist.

18. Heizeinrichtung nach einem der Ansprüche 13 bis 17, **dadurch gekennzeichnet, dass** in dem Metallrohr (4) ein volumenelastisches Ausgleichselement (50, 51) angeordnet ist, das bei einem Einfrieren von Flüssigkeit in dem Metallrohr (4), komprimiert wird, um eine Volumenausdehnung der Flüssigkeit auszugleichen.

19. Verwendung eines Metallrohrs (4, 5) in einem Reduktionsmittelversorgungssystem für einen Abgasreinigungskatalysator (2) einer Verbrennungskraftmaschine nach Anspruch 1 oder 13 als Widerstandsheizelement zum Auftauen von Reduktionsmittel und als Leitung zum Fördern von aufgetautem Reduktionsmittel.

## Claims

1. A reductant supply system for a waste gas cleaning catalyst of an internal combustion engine, in particular for a vehicle, comprising:
- a reductant rank (1) for the holding of reductant;
- a connection line (4, 5) for the conveyance of reductant from the reductant tank (3) to a waste gas cleaning catalyst (2), and
- a pump (6) to pump reductant via the connection line (4, 5) from the reductant tank (3) to the catalyst (2),
**characterized in that** at least one section of the connection line (4, 5) is configured as corrosion-resistant metal pipe that is provided with terminal lugs (10, 11, 12, 13) in order to convey an electric heating current through the connection line (4, 5) for the defrosting of reductant and **in that** a section of the metal pipe is surrounded by an external pipe or tube.

2. A reductant supply system according to claim 1, **characterized in that** the metal pipe (4, 5) is constituted by several sections by means of a coupling, especially a plug-in coupling.

3. A reductant supply system according to any of above claims, **characterized in that** the pump (6) is arranged between two sections of the connection line (4, 5), each of which is configured as a metal pipe and provided with terminal lugs (10,11,12,13), wherein each of the terminal lugs (11, 12) closest to the pump (6) of the two metal pipes (4, 5) has the same voltage while in operation.

4. A reductant supply system according to any of above claims, **characterized in that** a section of the metal pipe (5) is encased by a finned or corrugated tube (22) out of plastic.

5. A reductant supply system according to any of above claims, **characterized by** a fluid inlet and a fluid outlet in order to convey between the external tube (22) and the metal pipe (5) a heated fluid, especially a fluid to be heated by the loss of heat of the internal combustion engine.

6. A reductant supply system according to any of above claims, **characterized in that** the connection line (4, 50) contains an equalizer (50, 51, 60) in order to compensate, in the case of a freezing of the reductant, for a volume expansion of the reductant in the connection line (4, 5).

7. A reductant supply system according to claim 6, **characterized in that** the equalizer means is a volume-elastic equalizer (50, 51) installed in the connection line (4, 5) that is compressed during the freezing of reductant in order to compensate for a volume expansion of the reductant.

8. A reductant supply system according to claim 7, **characterized in that** the equalizing means is a gas-filled chamber (51).

9. A reduction supply system according to claim 8, **characterized in that** the gas-filled chamber (51) is configured as a gap between the inside of the connection line (4, 5) and the outside of a tube (60) arranged in the connection line, which tube conveys urea while in operation.

10. A reductant supply system according to claim 9, **characterized in that** the tube (60) has ribs (61) on the outside, especially longitudinal ribs (61).

11. A reductant supply system according to claim 7 or 8, **characterized in that** the equalizer (50) is a tube with gas-filled chambers (51).

12. A reductant supply system according to any of above claims, **characterized in that** the metal pipe (4) has a cross-section that deviates from being circular, preferably by being oval or elliptical.

13. A heating unit for the defrosting of a corrosive solution for the reductant tank of a reductant supply system according to any of above claims, comprising:
- a metal pipe (4) for the conveyance of the defrosted solution, wherein terminal lugs (10, 11) are affixed at the metal pipe (4) in order to convey a heating current through the metal pipe (4) that heats up the metal pipe (4) for the defrosting of the solution.

14. A heating unit according to claim 13, **characterized in that** the metal pipe (4) is a corrosion-resistant metal pipe to be extended into the solution, which pipe can be attached as an intake pipe to a pump (6).

15. A heating unit according to claim 13 or 14, **characterized in that** the inside diameter of the metal pipe (4) is between 1.0 mm and 4 mm, preferably between 1.2 mm and 3 mm.

16. A heating unit according to any of the claims 13 to 15, **characterized in that** a temperature sensor (21) is affixed to the metal pipe (4).

17. A heating unit according to any of the claims 13 to 16, **characterized in that** at one end of the metal pipe (4) is affixed a plug-in coupling for the coupling to a pump (6).

18. A heating unit according to any of the claims 13 to 17, **characterized in that** in the metal pipe (4) is arranged a volume-elastic equalizer (50, 51) that, with a freezing of fluid in the metal pipe (4), is compressed in order to compensate for a volume expansion of the fluid.

19. Use of a metal pipe (4, 5) in a reductant supply system for a waste gas cleaning catalyst (2) of an internal combustion engine according to claim 1 or 13 as a resistance heating element for the defrosting of reductant and for the conveyance of defrosted reductant.

## Revendications

1. Système d'alimentation en agent de réduction pour un catalyseur de purification des gaz d'échappement d'un moteur à combustible, en particulier d'un véhicule automobile, comprenant :
- un réservoir d'agent de réduction (3) destiné à accueillir l'agent de réduction,
- une conduite de liaison (4, 5) destinée à transporter l'agent de réduction du réservoir d'agent de réduction (3) vers un catalyseur de purification de gaz d'échappement (2), et
- une pompe (6) destinée à pomper l'agent de réduction du réservoir d'agent de réduction (3) vers le catalyseur (2), à travers la conduite de liaison (4, 5),
**caractérisé en ce qu'**au moins une section de la conduite de liaison (4, 5) est conçue comme une conduite métallique résistante à la corrosion, pourvue de raccords électriques (10, 11, 12, 13), pour conduire un courant de chauffe électrique à travers la conduite de liaison (4, 5) en vue de décongeler l'agent de réduction, et
**en ce qu'**une section de la conduite métallique (5) est entourée par une conduite externe (22) ou un tube externe.

2. Système d'alimentation en agent de réduction selon la revendication 1, **caractérisé en ce que** la conduite métallique (4, 5) est assemblée à partir de plusieurs pièces, au moyen d'un accouplement, en particulier d'un accouplement emboîtable.

3. Système d'alimentation en agent de réduction selon l'une des revendications précédentes, **caractérisé en ce que** la pompe (6) est installée entre deux sections de la conduite de liaison, qui sont chacune conçues comme des conduites métalliques et pourvues de raccords électriques (10, 11, 12, 13), les raccords (11, 12) des deux conduites métalliques (4, 5) les plus proches de la pompe (6) se trouvant au même potentiel électrique pendant le fonctionnement.

4. Système d'alimentation en agent de réduction selon l'une des revendications précédentes, **caractérisé en ce qu'**une section de la conduite métallique (5) est entourée par un tube ondulé ou nervuré (22) en plastique.

5. Système d'alimentation en agent de réduction selon l'une des revendications précédentes, **caractérisé par** une entrée de fluide et une sortie de fluide, pour faire passer un fluide chauffé entre le tube extérieur (22) et la conduite métallique (5), en particulier un fluide chauffé par la chaleur dégagée par le moteur à combustion.

6. Système d'alimentation en agent de réduction selon l'une des revendications précédentes, **caractérisé en ce que** la conduite de liaison (4, 5) contient un agent de compensation (50, 51, 60), pour compenser une expansion en volume de l'agent de réduction dans la conduite de liaison lors du gel de l'agent de réduction.

7. Système d'alimentation en agent de réduction selon la revendication 6, **caractérisé en ce que** l'agent de compensation est un élément de compensation (50, 51) à volume élastique, disposé dans la conduite de liaison (4, 5), qui est comprimé lors du gel de l'agent de réduction dans la conduite de liaison (4, 5), pour compenser une expansion en volume de l'agent de réduction.

8. Système d'alimentation en agent de réduction selon la revendication 7, **caractérisé en ce que** l'élément de compensation est une chambre (51) remplie de gaz.

9. Système d'alimentation en agent de réduction selon la revendication 8, **caractérisé en ce que** la chambre (51) remplie de gaz est conçue comme un espace intermédiaire entre le côté intérieur de la conduite de liaison (4, 5) et le côté extérieur d'un tube (60) disposé dans la conduite de liaison, guidant une solution d'urée pendant le fonctionnement.

10. Système d'alimentation en agent de réduction selon la revendication 9, **caractérisé en ce que** le tube (60) comporte des nervures (61), en particulier des nervures longitudinales (61), de son côté extérieur.

11. Système d'alimentation en agent de réduction selon la revendication 7 ou 8, **caractérisé en ce que** l'élément de compensation (50) est un tube avec des chambres (51) remplies de gaz.

12. Système d'alimentation en agent de réduction selon l'une des revendications précédentes, **caractérisé en ce que** la conduite métallique (4) présente une section transversale autre que circulaire, de préférence ovale ou elliptique.

13. Dispositif de chauffage pour la décongélation d'une solution corrosive, pour un réservoir d'agent de réduction d'un système d'alimentation en agent de réduction selon l'une des revendications précédentes, comprenant :
- une conduite métallique (4) pour transporter la solution décongelée,
- dans lequel des raccords électriques (10, 11) sont fixés à la conduite métallique (4), pour guider un courant de chauffage à travers la conduite métallique (4), chauffant la conduite métallique (4) pour décongeler la solution, et
- dans lequel la conduite métallique (4) comporte plusieurs spires (14), avec lesquelles elle s'introduit de façon appropriée dans le réservoir d'urée en tant que conduite d'aspiration.

14. Dispositif de chauffage selon la revendication 13, **caractérisé en ce que** la conduite métallique (4) est une conduite métallique résistante à la corrosion, destinée à être plongée dans la solution et pouvant être raccordée à une pompe (6), en tant que conduite d'aspiration.

15. Dispositif de chauffage selon la revendication 13 ou 14, **caractérisé en ce que** la conduite métallique (4) présente un diamètre intérieur compris entre 1,0 mm et 4 mm, de préférence entre 1,2 mm et 3 mm.

16. Dispositif de chauffage selon l'une des revendications 13 à 15, **caractérisé en ce qu'**un capteur de température (21) est monté sur la conduite métallique (4).

17. Dispositif de chauffage selon l'une des revendications 13 à 16, **caractérisé en ce qu'**un accouplement de raccordement est monté à une extrémité de la conduite métallique (4), pour un raccordement à une pompe (6).

18. Dispositif de chauffage selon l'une des revendications 13 à 17, **caractérisé en ce qu'**un élément de compensation (50, 51) à volume variable est installé dans la conduite métallique (4), lequel est comprimé dans la conduite métallique (4) lors du gel de liquide, pour compenser une expansion en volume du liquide.

19. Utilisation d'une conduite métallique (4, 5) dans un système d'alimentation en agent de réduction pour un catalyseur de purification de gaz d'échappement (2) d'un moteur à combustion selon la revendication 1 ou 13, en tant qu'élément de chauffage à résistance, pour la décongélation d'un agent de réduction et en tant que conduite pour le transport de l'agent de réduction décongelé.
